# EUROPEAN PATENT APPLICATION

(11) **EP 4 524 195 A1**
(43) Date of publication of application: **19.03.2025**
(21) Application number: 23803631.3
(22) Date of filing: 12.05.2023
(51) Int. Cl.: C08L 63/00, B32B 5/24, B32B 5/26, C08G 59/54, C08H 7/00, C08J 5/04, C08J 5/24, C08K 5/21, C08K 5/315, C08K 7/02, C08L 71/02, C08L 97/00

(54) **CURABLE RESIN COMPOSITION, CURED PRODUCT, PREPREG, CURED PRODUCT OF PREPREG, LAMINATED STRUCTURE, CURABLE RESIN COMPOSITION PRODUCTION METHOD, AND CURED PRODUCT PRODUCTION METHOD**

(30) Priority: 12.05.2022 JP 2022078702; 24.10.2022 JP 2022169599
(71) Applicant: Super Resin, Inc., Inagi-shi, Tokyo 206-0822 (JP)
(72) Inventor: ICHIKAWA, Daiki, Inagi-shi, Tokyo 206-0822 (JP); KUNITA, Maiko, Inagi-shi, Tokyo 206-0822 (JP); TAYAMA, Kosuke, Inagi-shi, Tokyo 206-0822 (JP); MIZUNO, Yasuko, Inagi-shi, Tokyo 206-0822 (JP)
(74) Representative: Zacco Sweden AB
(86) International application number: PCT/JP2023/017880
(87) International publication number: WO 2023/219157

(57) **Abstract**

A curable resin composition containing an epoxy resin, and a modified lignin chemically modified by polyethylene glycol, in which the epoxy resin and the modified lignin are in an incompatible state; a curable resin composition containing an epoxy resin, a modified lignin chemically modified by polyethylene glycol, and a fiber, in which a void fraction of a cured product is 3% or less, in which the cured product is obtained by processing the curable resin composition into a sheet having a thickness of 0.2 mm, stacking five such sheets to make a test piece having a thickness of 1 mm, and thermally curing the test piece under conditions of a pressure of 0.3 MPa and a temperature of 150°C; and a curable resin composition containing an epoxy resin, a modified lignin, and a curing agent, in which an amount of heat generation in curing increases along with the time course.

## Description

### Technical Field

The present invention relates to a curable resin composition, a cured product, a prepreg, a cured product of a prepreg, a laminated structure, a method for producing a curable resin composition, and a method for producing a cured product, in which a biomass resource is used.

### Background Art

Lignin is a natural polymer compound extracted from plant such as trees, and has been known from long ago. However, lignin largely varies in structure and is hardly handled as an industrial material. A modified lignin which has been recently extracted by a new procedure is high in structural uniformity, and is expected to be used as an industrial material (for example, Patent Literature 1).

A modified lignin is studied about use thereof in combination with various resins. For example, Patent Literature 2 describes a cured product which is obtained by direct reaction of a modified lignin and an epoxy compound for the purpose of effective use of lignin as a woody biomass material.

### Citation List

### Patent Literature

Patent Literature 1: Japanese Patent Laid-Open No. 2017-197517
Patent Literature 2: Japanese Patent Laid-Open No. 2019-108490

### Summary of Invention

### Technical Problem

The present invention encompasses the following embodiments.
<1> A curable resin composition containing an epoxy resin, and a modified lignin chemically modified by polyethylene glycol, wherein the epoxy resin and the modified lignin are in an incompatible state.
<2> The curable resin composition according to <1>, wherein the curable resin composition further contains a fiber, and the epoxy resin and the modified lignin are in an incompatible state.
<3> A curable resin composition containing an epoxy resin, a modified lignin chemically modified by polyethylene glycol, and a fiber, wherein
   a void fraction of a cured product is 3% or less, in which the cured product is obtained by processing the curable resin composition into a sheet having a thickness of 0.2 mm, stacking five such sheets to make a test piece having a thickness of 1 mm, and thermally curing the test piece under conditions of a pressure of 0.3 MPa and a temperature of 150°C.
<4> A curable resin composition containing an epoxy resin, a modified lignin, and a curing agent, wherein
   an amount of heat generation in curing increases along with time course.
<5> The curable resin composition according to <4>, wherein a maximum amount of heat generation in curing, at a temperature of 100°C for 10 to 60 minutes in differential scanning calorimetry, is 100% or more relative to an initial amount of heat generation in curing.
<6> The curable resin composition according to <5>, wherein a proportion of the amount of heat generation in curing increases over time relative to the initial amount of heat generation in curing, in a relationship between an elapsed time under a condition of a temperature of 100°C and the amount of heat generation in curing.
<7> The curable resin composition according to any of <4> to <6>, wherein a local maximum value of a viscosity is observed when a temperature rises under a condition of 5°C/min from room temperature of 25°C by temperature-programmed viscosity measurement.
<8> The curable resin composition according to <7>, wherein a temperature giving the local maximum value is 70 to 130°C.
<9> The curable resin composition according to any of <4> to <8>, wherein the modified lignin is a modified lignin chemically modified by polyethylene glycol.
<10> The curable resin composition according to <4> to <9>, further containing a fiber.
<11> The curable resin composition according to any of <1> to <10>, further containing an amine curing agent.
<12> The curable resin composition according to <11>, wherein the amine curing agent contains at least one selected from the group consisting of an aminophenylsulfone curing agent and a dicyandiamide curing agent.
<13> The curable resin composition according to <11> or <12>, further containing at least one selected from the group consisting of a boron halide-amine complex curing accelerator and an aromatic urea curing accelerator.
<14> The curable resin composition according to <2>, <3> or <10>, wherein the fiber is at least one selected from the group consisting of a carbon fiber, a glass fiber, an organic fiber, and a natural fiber.
<15> The curable resin composition according to <14>, wherein the fiber is a carbon fiber.
<16> The curable resin composition according to any of <1> to <15>, wherein a content of the modified lignin is 20 to 60 parts by mass based on 100 parts by mass of the epoxy resin.
<17> A cured product of the curable resin composition according to any of <1> to <16>.
<18> A prepreg including the curable resin composition according to any of <1> to <16>.
<19> The prepreg according to <18>, wherein a void fraction of a cured product obtained by thermal curing under conditions of a pressure of 0.3 MPa and a temperature of 150°C is 3% or less.
<20> A cured product of the prepreg according to <18>.
<21> The cured product according to <20>, wherein a content of the fiber is 30 to 70% by volume based on a volume of the cured product.
<22> The cured product according to <21>, wherein a compressive strength in an in-plane compression test according to JIS K 7018:2019 is 600 to 900 MPa.
<23> The cured product according to <21> or <22>, wherein a compressive elastic modulus in an in-plane compression test according to JIS K 7018:2019 is 60 to 80 GPa.
<24> The cured product according to any of <21> to <23>, wherein a tensile elastic modulus in a tensile test according to JIS K 7164:2005 is 60 to 80 GPa.
<25> The cured product according to any of <21> to <24>, wherein a tensile strength in a tensile test according to JIS K 7164:2005 is 600 to 1000 MPa.
<26> The cured product according to any of <21> to <25>, wherein a bending elastic modulus in a bending test according to JIS K 7074:1988 is 50 to 80 GPa.
<27> The cured product according to any of <21> to <26>, wherein a bending strength in a bending test according to JIS K 7074:1988 is 800 to 1200 MPa.
<28> The cured product according to any of <21> to <27>, wherein an apparent interlaminar shear strength in an apparent interlaminar shear test according to JIS K 7078:1991 is 50 to 90 MPa.
<29> The cured product according to any of <17> and <20> to <28>, wherein the cured product is biodegradable.
<30> The cured product according to <29>, wherein a crack is generated by leaving the cured product in the presence of a white-rot fungus under conditions of a temperature of 23°C and a humidity of 50 to 60% for 150 days.
<31> A laminated structure including
   a first resin layer including the cured product according to any of <20> to <30>,
   a foam layer including a foam, and
   a second resin layer including the cured product according to any of <20> to <30>,
   in this order.
<32> The laminated structure according to <31>, wherein the foam includes modified lignin chemically modified by polyethylene glycol.
<33> A method for producing a curable resin composition, including a resin mixing step of mixing an epoxy resin, and a modified lignin chemically modified by polyethylene glycol, and having a solvent content of 20% by mass or less to obtain a resin mixture.
<34> The method for producing a curable resin composition according to <33>, further comprising a fiber impregnation step of impregnating a fiber with the resin mixture, to obtain a curable resin composition.
<35> A method for producing a cured product of a curable resin composition, including a curing step of thermally curing the curable resin composition obtained by the method for producing a curable resin composition according to <33> or <34>.

### Brief Description of Drawings

[Figure 1] Figure 1 is a cross-sectional view illustrating a schematic configuration of a laminated structure according to the present embodiment.
[Figure 2] Figure 2 is a schematic diagram of the results of temperature-programmed viscosity measurement of a curable resin composition according to the present embodiment.

### Description of Embodiments

Hereinafter, modes for carrying out the present invention (hereinafter, also referred to as "the present embodiment".) are described in detail. The present invention is not limited to the present embodiment, and can be variously modified and carried out within the gist thereof.

### [Curable resin composition]

### (First embodiment)

While a resin with a modified lignin, as shown in Patent Literature 2, has been conventionally known, various physical properties such as compressive strength are demanded to be improved.

An object of the first embodiment is to provide a curable resin composition, a cured product, a prepreg, a cured product of a prepreg, a laminated structure, a method for producing a curable resin composition, and a method for producing a cured product, in which high compressive strength after curing is exhibited even when a biomass resource is utilized.

The curable resin composition according to the first embodiment contains an epoxy resin, and a modified lignin chemically modified by polyethylene glycol, in which the epoxy resin and the modified lignin are in an incompatible state.

The curable resin composition according to the first embodiment exhibits high compressive strength after curing even when a biomass resource is utilized. It is presumed that the modified lignin chemically modified by polyethylene glycol is used to provide an incompatible state and thus obtain a curable resin composition exhibiting high compressive strength after curing.

The curable resin composition according to the present embodiment exhibits high biodegradability even when a biomass resource is utilized. It is presumed that, since the epoxy resin and the modified lignin are in an incompatible state, biodegradation starts from a modified lignin site which is easily biodegraded when biodegradation occurs, and the degradation triggers generation of a crack to result in penetration of microorganisms into the crack, thereby providing a curable resin composition whose cured product after curing is enhanced in biodegradability.

### <Incompatible state>

The curable resin composition according to the present embodiment is such that the epoxy resin and the modified lignin are in an incompatible state. The curable resin composition according to the present embodiment, in which the epoxy resin and the modified lignin are in an incompatible state, thus exhibits excellent bending strength even when the modified lignin being a biomass resource is utilized. The curable resin composition according to the present embodiment, in which the epoxy resin and the modified lignin are in an incompatible state, thus is excellent in tensile elastic modulus and tensile strength and also excellent in apparent interlaminar shear strength even when the modified lignin being a biomass resource is utilized.

The "incompatible state" means that the epoxy resin and the modified lignin form an interface. Such an incompatible state is confirmed by a method described in Examples. The epoxy resin and the modified lignin can be adjusted so as to be in an incompatible state, by selecting the blending ratio of the epoxy resin and the modified lignin, and the type of a curing agent.

### (Second embodiment)

While a resin with a modified lignin, as shown in Patent Literature 2, has been conventionally known, various physical properties such as compressive strength are demanded to be improved.

An object of the first embodiment is then to provide a curable resin composition, a cured product, a prepreg, a cured product of a prepreg, a laminated structure, a method for producing a curable resin composition, and a method for producing a cured product, in which high compressive strength after curing is exhibited even when a biomass resource is utilized.

The curable resin composition according to the second embodiment contains an epoxy resin, a modified lignin chemically modified by polyethylene glycol, and a fiber, wherein
the void fraction of a cured product is 3% or less, in which the cured product is obtained by processing the curable resin composition into a sheet having a thickness of 0.2 mm, stacking five such sheets to make a test piece having a thickness of 1 mm, and thermally curing the test piece under conditions of a pressure of 0.3 MPa and a temperature of 150°C.

The curable resin composition according to the present embodiment has such a constitution, and thus exhibits excellent bending strength even when a modified lignin being a biomass resource is utilized. The curable resin composition according to the present embodiment is excellent in tensile elastic modulus and tensile strength and also excellent in apparent interlaminar shear strength even when a modified lignin being a biomass resource is utilized. In other words, the curable resin composition according to the present embodiment, while is formed by partially replacing 100% of a conventional curable resin with a modified lignin being a biomass resource, is excellent in tensile elastic modulus and tensile strength and is also excellent in apparent interlaminar shear strength at the same levels as in the case of 100% of a conventional curable resin.

### <Void fraction>

The curable resin composition according to the present embodiment is such that the void fraction of a cured product is 3% or less, in which the cured product is obtained by processing the curable resin composition into a sheet having a thickness of 0.2 mm, stacking five such sheets to make a test piece having a thickness of 1 mm, and thermally curing the test piece under conditions of a pressure of 0.3 MPa and a temperature of 150°C. The curable resin composition according to the present embodiment is such that the void fraction is 3% or less, and thus exhibits excellent bending strength even when a modified lignin being a biomass resource is utilized. The curable resin composition according to the present embodiment is such that the void fraction is 3% or less, and thus is excellent in tensile elastic modulus and tensile strength and also excellent in apparent interlaminar shear strength even when a modified lignin being a biomass resource is utilized.

The void fraction in the curable resin composition is preferably 2% or less, more preferably 1% or less, more preferably 0.8% or less. The lower limit of the void fraction in the curable resin composition is not particularly limited, and, for example, may be 0.01% or more.

The void fraction in the curable resin composition is determined by processing the curable resin composition into a sheet having a thickness of 0.2 mm, stacking five such sheets to make a test piece having a thickness of 1 mm, and thermally curing the test piece under conditions of a pressure of 0.3 MPa and a temperature of 150°C. The method for measuring the void fraction in the curable resin composition is performed more specifically by a method described in Examples.

### (Third embodiment)

A resin with a modified lignin, as shown in Patent Literature 2, has been conventionally known. In this regard, a curable resin including an epoxy resin and a curing agent has the problem of being cured or lost in curability due to gradual progression of reaction by storage at ordinary temperature.

An object of the third embodiment is to provide a curable resin, a cured product, a prepreg, a cured product of a prepreg, a laminated structure, a method for producing a curable resin composition, and a method for producing a cured product, in which excellent curability is exhibited even in the case of storage at ordinary temperature.

The present inventors have found that a resin composition containing an epoxy resin, a modified lignin, and a curing agent increases in amount of heat generation in curing, along with time course.

The curable resin composition according to the third embodiment contains an epoxy resin, a modified lignin, and a curing agent, wherein the amount of heat generation in curing increases along with time course. Such a constitution can be adopted to provide a thermally-curable resin, a cured product, a prepreg, a cured product of a prepreg, a laminated structure, a method for producing a curable resin composition, and a method for producing a cured product, in which a reactive group for curing the curable resin composition along with time course is not decreased even in the case of storage at ordinary temperature and excellent curability is exhibited.

Common curable resins tend to be decreased in amount of heat generation in curing due to deactivation of a reactive group along with time course. However, in contradiction to a conventional common sense, the curable resin composition according to the third embodiment is increased in amount of heat generation in curing, along with time course. The reason for this, although is not particularly limited, is considered because a reactive substituent is generated by the occurrence of cleavage reaction of the modified lignin due to heating or a reactive substituent is generated by progression of cleavage reaction by reaction of the modified lignin and the curing agent of the epoxy resin.

In the curable resin composition according to the third embodiment, the proportion of the maximum amount of heat generation in curing, at a temperature of 100°C for 10 to 60 minutes in differential scanning calorimetry, is preferably 100% or more relative to the initial amount of heat generation in curing. The proportion of the maximum amount of heat generation in curing is in the above range, and thus a curable resin is obtained which exhibits excellent curability even when stored at ordinary temperature. The proportion of the maximum amount of heat generation in curing is preferably 105% or more, more preferably 110% or more, further preferably 120% or more, from the same viewpoint, and the upper limit of the proportion of the maximum amount of heat generation in curing is not particularly limited, and, for example, may be 300% or less, may be 200% or less, or may be 180% or less.

The proportion of the maximum amount of heat generation in curing can be measured by the following method.

The result obtained by packing 2 to 5 mg of the curable resin composition in an aluminum sample pan having a volume of 50 µL, and performing measurement under the following conditions is defined as the initial amount of heat generation in curing. The result obtained by placing the curable resin composition in air under a condition of a temperature of 100°C, sampling the curable resin composition every 10 minutes and packing 2 to 5 mg of the sampled product in an aluminum sample pan having a volume of 50 µL, and performing measurement under the following conditions is defined as the amount of heat generation in curing.

### <Conditions>

Apparatus: differential scanning calorimeter (DSC, Model number "DSC-60A" manufactured by Shimadzu Corporation)
Initial temperature: 40°C
Rate of temperature rise: 10°C/min
Maximum temperature raised: 250°C

The integral value in a DSC curve around 60°C to 250°C is determined from the results obtained by the above measurement, and is defined as the amount of heat generation in curing. In a case where a plurality of exothermic peaks is observed in a mixture or the like, the total is adopted as the amount of heat generation in curing of the relevant composition. The value showing the maximum value, among the results measured at 10 minutes, 20 minutes, 30 minutes, 40 minutes, 50 minutes, and 60 minutes, is defined as the maximum amount of heat generation in curing. The proportion (%) of the maximum amount of heat generation in curing is calculated from the following expression. Proportion (%) of maximum amount of heat generation in curing = [Maximum amount of heat generation in curing]/[Initial amount of heat generation in curing] × 100

The "initial amount of heat generation in curing" means the amount of heat generation in curing, immediately before placement of the curable resin composition in air under a condition of a temperature of 100°C in the above measurement method.

The above maximum amount of heat for curing can be adjusted by allowing the modified lignin to be contained in the curable resin composition.

In the curable resin composition according to the third embodiment, the proportion of the amount of heat generation in curing increases with time relative to the initial amount of heat generation in curing, in a relationship between the elapsed time under a condition of a temperature of 100°C and the amount of heat generation in curing. Such a requirement may be set so that the amount of heat generation in curing increases with time as compared with initial amount of heat generation in curing, for at least 10 minutes from the placement under a condition of a temperature of 100°C. Such properties are possessed, thereby allowing a curable resin exhibiting more excellent curability to be obtained even in the case of storage at ordinary temperature.

In the curable resin composition according to the third embodiment, the local maximum value of the viscosity is preferably shown when a temperature rises under a condition of 5°C/min from room temperature of 25°C by temperature-programmed viscosity measurement. Such properties about the viscosity are possessed, thereby also allowing a curable resin exhibiting more excellent curability to be obtained even in the case of storage at ordinary temperature.

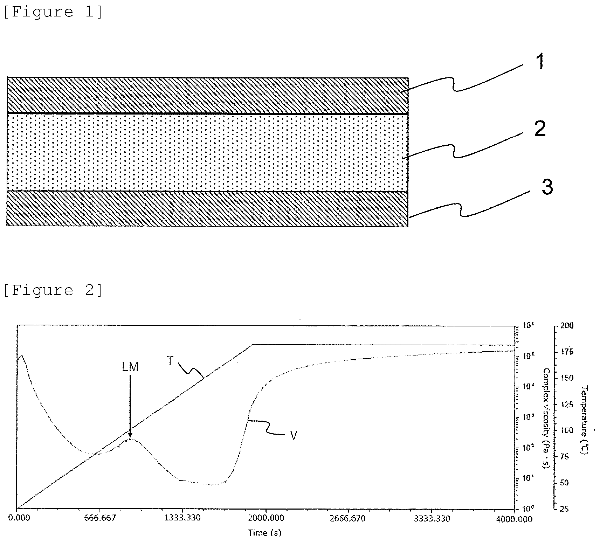

Figure 2 is a schematic diagram of the results of temperature-programmed viscosity measurement of the curable resin composition according to the present embodiment.

The local maximum value here means a localized maximum value in temperature-programmed viscosity measurement. The "having the local maximum value" means that the viscosity increases along with temperature rise and the viscosity decreases with a certain point as a boundary in a spectrum obtained by temperature-programmed viscosity measurement. In Figure 2, T indicates the change in temperature, V indicates the change in viscosity, and LM indicates the local maximum value.

The temperature giving the local maximum value is preferably 70 to 130°C, more preferably 80 to 120°C, further preferably 90 to 115°C.

The temperature-programmed viscosity measurement is performed with a sample installed on a plate under the following measurement conditions.

Apparatus: rheometer (product name "DISCOVERY HR-2" TA Instruments Japan),
Plate used: 25ϕ parallel plate,
Plate gap: 0.8 mm,
Measurement frequency: 1.0 Hz,
Initial temperature: 25°C,
Rate of temperature rise: 5°C/min
Maximum temperature raised: 180°C
Stress: 300 Pa

The curable resin composition, in which the local maximum value of the viscosity is observed by the temperature-programmed viscosity measurement, can be obtained by allowing the modified lignin to be contained in the curable resin composition.

Hereinafter, a common constitution for the first embodiment, the second embodiment, and the third embodiment is described.

### <Epoxy resin>

The epoxy resin in the present embodiment is preferably an epoxy resin having two or more epoxy groups in one molecule. The epoxy resin is not particularly limited, and examples thereof include a glycidyl ether type epoxy resin, a glycidyl amine type epoxy resin, and a glycidyl ester type epoxy resin.

Epoxy resins are classified into various epoxy resins depending on the difference in main backbone, and examples of the above respective types of epoxy resins include bisphenol type epoxy resins such as a bisphenol A type epoxy resin, a bisphenol F type epoxy resin, and a bisphenol S type epoxy resin; alicyclic epoxy resins such as a dicyclopentadiene type epoxy resin; aliphatic linear epoxy resins; novolac type epoxy resins such as a phenol novolac type epoxy resin, a cresol novolac type epoxy resin, a bisphenol A novolac type epoxy resin, a bisphenol F novolac type epoxy resin, a phenol aralkyl novolac type epoxy resin, and a biphenyl aralkyl novolac type epoxy resin; stilbene type epoxy resins; naphthalene backbone-containing epoxy resins such as a naphthol novolac type epoxy resin, and a naphthol aralkyl type epoxy resin; biphenyl type epoxy resins; xylylene type epoxy resins; and dihydroanthracene type epoxy resins.

In a case where the epoxy resin is used, a curing agent, a curing aid, and the like of the epoxy resin may be, if necessary, used in combination.

### (Curing agent)

The curable composition according to the present embodiment preferably includes a curing agent. The curing agent is not particularly limited as long as it can cure the epoxy resin, and, for example, an amine curing agent such as an aminophenylsulfone curing agent, a dicyandiamide curing agent, an aromatic amine curing agent, a boron halide-amine complex, and any other amine curing agent, a urea curing agent, an imidazole curing agent, a thiol curing agent, and an acid anhydride can be used. In particular, an amine curing agent is preferred, at least one selected from an aminophenylsulfone curing agent, a dicyandiamide curing agent, an aromatic amine curing agent, and a boron halide-amine complex is more preferred, and an aminophenylsulfone curing agent or a dicyandiamide curing agent is further preferred. Such an amine curing agent is used to allow the epoxy resin and the modified lignin to be easily in an incompatible state.

The amount of the curing agent blended in the curable resin composition according to the present embodiment is preferably 0.4 to 1 time, more preferably 0.5 to 0.8 times in terms of the molar number of active hydrogen in the curing agent based on the total molar number of the epoxy group in the epoxy resin.

The amount of the amine curing agent blended in the curable resin composition according to the present embodiment is preferably 0.4 to 1 time, more preferably 0.5 to 0.8 times in terms of the molar number of active hydrogen in the amine curing agent based on the total molar number of the epoxy group in the epoxy resin.

Examples of a commercially available product of the dicyandiamide curing agent include DICY7 and DICY15 (these are manufactured by Mitsubishi Chemical Corporation), and DICYANEX1400F (manufactured by Air Products and Chemicals, Inc.).

The aromatic amine curing agent is preferably an aromatic polyamine. The aromatic amine curing agent is not particularly limited, and examples thereof include 3,3'-diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-diisopropyl-5,5'-dimethyl-4,4'-diaminodiphenylmethane, 3,3'-di-t-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-t-butyl-5,5'-diethyl-4,4'-diaminodiphenylmethane, 3,3',5,5'-tetraisopropyl-4,4'-diaminodiphenylmethane, 3,3'-di-t-butyl-5,5'-diisopropyl-4,4'-diaminodiphenylmethane, 3,3',5,5'-tetra-t-butyl-4,4'-diaminodiphenylmethane, 4,4'-diaminodiphenylmethane, 4,4'-diaminodiphenylsulfone, 3,3'-diaminodiphenylsulfone, m-phenylenediamine, m-xylylenediamine, and diethyltoluenediamine.

Examples of the boron halide-amine complex include a boron trifluoride-aniline complex, a boron trifluoride-p-chloroaniline complex, a boron trifluoride-ethylamine complex, a boron trifluoride-isopropylamine complex, a boron trifluoride-benzylamine complex, a boron trifluoride-dimethylamine complex, a boron trifluoride-diethylamine complex, a boron trifluoride-dibutylamine complex, a boron trifluoride-piperidine complex, a boron trifluoride-dibenzylamine complex, a boron trichloride-aniline complex, a boron trichloride-p-chloroaniline complex, a boron trichloride-ethylamine complex, a boron trichloride-isopropylamine complex, a boron trichloride-benzylamine complex, a boron trichloride-dimethylamine complex, a boron trichloride-diethylamine complex, a boron trichloride-dibutylamine complex, a boron trichloride-piperidine complex, a boron trichloride-dibenzylamine complex, and a boron trichloride--N,N-dimethyloctylamine complex.

The urea curing agent is not particularly limited as long as it has a dimethylureido group in its molecule and is heated at high temperature to generate an isocyanate group and dimethylamine and these activate an epoxy group, and examples thereof can include an aromatic dimethylurea in which a dimethylureido group is bound with an aromatic ring, and an aliphatic dimethylurea in which a dimethylureido group is bound with an aliphatic compound.

The imidazole curing agent is not particularly limited, and examples thereof include an imidazole adduct, a clathrate imidazole, a microcapsule type imidazole, and an imidazole compound in which a stabilizer is coordinated.

The thiol curing agent is not particularly limited, and examples thereof include pentaerythritol tetrakis(3-mercaptobutyrate) and a thiol group-containing polyether resin. Examples of a commercially available product of the thiol curing agent include Karenz MT PE1 (manufactured by Showa Denko K.K.) and Polythiol QE-340M (manufactured by Toray Fine Chemicals Co., Ltd.).

### (Curing accelerator)

The curable composition according to the present embodiment preferably includes a curing accelerator. The curing accelerator is not particularly limited, and examples thereof include a boron halide-amine complex curing accelerator, an aromatic urea curing accelerator, an imidazole curing accelerator, and a phosphorus curing accelerator. In particular, a boron fluoride-amine complex curing accelerator or an aromatic urea curing accelerator is preferably included.

Examples of the boron halide-amine complex curing accelerator include a boron trifluoride-aniline complex, a boron trifluoride-p-chloroaniline complex, a boron trifluoride-ethylamine complex, a boron trifluoride-isopropylamine complex, a boron trifluoride-benzylamine complex, a boron trifluoride-dimethylamine complex, a boron trifluoride-diethylamine complex, a boron trifluoride-dibutylamine complex, a boron trifluoride-piperidine complex, a boron trifluoride-dibenzylamine complex, a boron trichloride-aniline complex, a boron trichloride-p-chloroaniline complex, a boron trichloride-ethylamine complex, a boron trichloride-isopropylamine complex, a boron trichloride-benzylamine complex, a boron trichloride-dimethylamine complex, a boron trichloride-diethylamine complex, a boron trichloride-dibutylamine complex, a boron trichloride-piperidine complex, a boron trichloride-dibenzylamine complex, and a boron trichloride-N,N-dimethyloctylamine complex. In particular, boron fluoride-amine complex curing accelerators such as a boron trifluoride-aniline complex, a boron trifluoride-p-chloroaniline complex, a boron trifluoride-ethylamine complex, a boron trifluoride-isopropylamine complex, a boron trifluoride-benzylamine complex, a boron trifluoride-dimethylamine complex, a boron trifluoride-diethylamine complex, a boron trifluoride-dibutylamine complex, a boron trifluoride-piperidine complex, and a boron trifluoride-dibenzylamine complex are preferred.

The boron halide-amine complex may also function as a curing agent, as described above. In a case where the boron halide-amine complex is included as a curing agent, the curing accelerator preferably is not the boron halide-amine complex curing accelerator.

The aromatic urea curing accelerator is not particularly limited, and examples thereof include 3-phenyl-1,1-dimethylurea, 3-(3-chloro-4-methylphenyl)-1,1-dimethylurea, 3-(3,4-dichlorophenyl)-1,1-dimethylurea, and toluene bisdimethylurea. Examples of a commercially available product of the aromatic urea curing accelerator include DCMU-99 (manufactured by Hodogaya Chemical Co., Ltd.) and "Omicure (registered trademark)" 24 (manufactured by PTI Japan Limited).

The imidazole curing accelerator is not particularly limited, and examples thereof include 1-benzyl-2-methylimidazole, 1-benzyl-2-ethylimidazole, 1-cyanoethyl-2-methylimidazole, 1-cyanoethyl-2-ethyl-4-methylimidazole, and 1-cyanoethyl-2-phenylimidazole. Examples of a commercially available product of the imidazole curing accelerator include "Cureduct (registered trademark)" P-0505, 1B2MZ, 1B2PZ, 2MZ-CN, 2E4MZ-CN, and 2PZ-CN (these are manufactured by Shikoku Chemicals Corporation).

The phosphorus curing accelerator is not particularly limited, and examples thereof include triphenylphosphine, tri-o-tolylphosphine, tris(p-methoxyphenyl) phosphine, triphenylphosphine triphenylborane, and tetraphenylphosphonium tetraphenyl borate. Examples of a commercially available product of the phosphorus compound include "Hokuko TPP (registered trademark)", "TOTP (registered trademark)", and "TPP-K (registered trademark)" (these are manufactured by Hokko Chemical Industry Co., Ltd.).

The amount of the curing accelerator blended is preferably 1 to 8 parts by mass, more preferably 1.5 to 6 parts by mass, further preferably 2 to 4 parts by mass based on 100 parts by mass of the epoxy resin.

### <Modified lignin>

The modified lignin according to the present embodiment is a modified lignin chemically modified by polyethylene glycol.

The lignin in the modified lignin is not particularly limited, and examples thereof include guaiacyl lignin (G type), syringyl lignin (S type), and p-hydroxyphenyl lignin (H type). Such lignin has a basic skeleton of a polymeric phenolic compound, and is included in general plants.

The origin of the lignin is not particularly limited, and examples thereof include woody plant-derived lignin and grass plant-derived lignin. The woody plant-derived lignin is not particularly limited, and examples thereof include softwood lignin contained in softwood (for example, Japanese cedar) and hardwood lignin contained in hardwood.

The woody plant-derived lignin contains no H type basic skeleton.

More specifically, the softwood lignin as the woody plant-derived lignin contains no S type basic skeleton and has a G type basic skeleton. The hardwood lignin has a G type basic skeleton and an S type basic skeleton.

Examples of the grass plant-derived lignin include rice lignin contained in gramineous plants (wheat straw, rice straw, corn, bamboo, and the like). The grass plant-derived lignin has all basic skeletons of H type, G type and S type.

Such lignin can be used singly or in combinations of two or more kinds thereof.

The lignin is preferably softwood lignin having a G type basic skeleton, more preferably softwood lignin derived from Japanese cedar, from the viewpoint of homogeneity of the modified lignin.

Such lignin has a basic skeleton of a polymeric phenolic compound, and is included in general plants. As lignin industrially extracted, there are known, for example, soda lignin, sulfite lignin, and kraft lignin respectively included in waste liquors (black liquors) discharged in production of pulp from plant materials (lignocellulose) as raw materials by a soda process, a sulfite process, and a kraft process.

The number average molecular weight of polyethylene glycol in the modified lignin is preferably 100 to 1000, more preferably 200 to 900, further preferably 300 to 800, still further preferably 400 to 600. The number average molecular weight can be determined as the molecular weight in terms of polyethylene glycol, by gel permeation chromatography.

The method for producing the modified lignin is not particularly limited, and examples thereof include a method described in Japanese Patent Laid-Open No. 2017-19751.

More specifically, the modified lignin chemically modified by polyethylene glycol can be obtained by, for example, pulping a plant material (lignocellulose) serving as a raw material of the lignin, with polyethylene glycol.

The pulping method is not particularly limited, and examples thereof include a method including mixing and reacting the plant material serving as a raw material of the lignin, polyethylene glycol, and an inorganic acid (for example, hydrochloric acid or sulfuric acid) as an acid catalyst.

The proportion of the polyethylene glycol blended to the plant material is preferably 200 to 1000 parts by mass, more preferably, 300 to 600 parts by mass of the polyethylene glycol, based on 100 parts by mass of the plant material serving as a raw material of the lignin.

The proportion of the inorganic acid blended to the polyethylene glycol is preferably 0.1 to 2 parts by mass, more preferably 0.2 to 1 part by mass of the inorganic acid (100% conversion), based on 100 parts by mass of the polyethylene glycol.

Reaction conditions under ordinary pressure include a reaction temperature of preferably 120 to 180°C, more preferably 130 to 150°C, and a reaction time of preferably 60 to 240 minutes, more preferably 60 to 120 minutes.

After completion of reaction, a known alkali (for example, ammonia or sodium hydroxide) is added at an appropriate ratio, to adjust the pH and extract the modified lignin into a solution. The pH after adjustment is preferably 8 to 14, more preferably 10 to 14, further preferably, 10.5 to 14.

Such a method not only provides pulp as a solid component, but also provides the modified lignin as a solution component (pulp waste liquor).

Next, the reaction liquid after completion of reaction may be treated by a known separation method such as filtration, pressing, or centrifugation, to separate the solid component (pulp) from a reaction product and recover the solution component (pulp waste liquor).

In this method, if necessary, the solid component (pulp) can also be washed to recover a solution (modified lignin) with which the solid component is impregnated.

Thereafter, in this method, the inorganic acid (for example, hydrochloric acid or sulfuric acid) or the like is added to adjust the pH, thereby depositing and precipitating the modified lignin. The pH after adjustment is preferably 5 or less, preferably, 3 or less, more preferably, 2 or less. The lower limit of the pH after adjustment is not particularly limited, and may be, for example, 1.5.

Thus, the modified lignin can be precipitated. The resulting precipitate can be recovered by, for example, a known method such as filtration, pressing, or centrifugation, thereby providing the modified lignin as a solid content.

The content of the modified lignin in the curable resin composition according to the present embodiment is preferably 20 to 80 parts by mass, more preferably 25 to 75 parts by mass, further preferably 30 to 70 parts by mass based on 100 parts by mass of the epoxy resin from the viewpoint of retention of excellent bending strength with an increase in amount of a biomass resource.

### <Fiber>

The fiber is not particularly limited, and examples thereof include a carbon fiber, a glass fiber, an organic fiber, and a natural fiber. Among these fibers, a carbon fiber is preferred.

The carbon fiber is not particularly limited, and examples thereof include acrylic, pitch-based and rayon-based carbon fibers.

While the mode of the carbon fiber here used can be, for example, a twisted yarn, an un-twisted yarn, or a non-twisted yarn, a twisted yarn leads to a non-parallel orientation of filaments constituting the carbon fiber, thereby causing deterioration in mechanic properties of the resulting carbon fiber-reinforced composite material, and thus an un-twisted yarn or a non-twisted yarn favorable in balance between formability and strength properties of the carbon fiber-reinforced composite material is preferably used.

The organic fiber is not particularly limited, and examples thereof include a boron fiber, an aramid fiber, a polyethylene fiber, and a polypara-phenylene benzobisoxazole fiber.

The natural fiber is not particularly limited, and examples thereof include bamboo and marijuana.

The fiber is preferably in a state of being impregnated with the above-mentioned epoxy resin and modified lignin.

The content of the fiber in the curable resin composition according to the present embodiment is not particularly limited, and is preferably 25 to 400 parts by mass, more preferably 40 to 240 parts by mass, further preferably 50 to 190 parts by mass based on 100 parts by mass of the epoxy resin and the modified lignin.

### [Cured product of curable resin composition]

The curable resin composition according to the present embodiment can be thermally cured or photo-cured and thus formed into a cured product of the curable resin composition (hereinafter, also simply referred to as "cured product"). In particular, thermal curing is preferred. Thermal curing conditions are not particularly limited, and heating may be made under condition of a temperature of 100 to 200°C.

The content of the fiber in a cured product according to the present embodiment is preferably 20 to 80% by volume, more preferably 30 to 70% by volume, further preferably 35 to 65% by volume based on the volume of the cured product.

The tensile elastic modulus of the cured product according to the present embodiment, in the tensile test according to JIS K 7164:2005, is preferably 60 to 80 GPa, more preferably 65 to 75 GPa. The method for measuring the tensile elastic modulus is according to a method described in Examples.

The tensile strength of the cured product according to the present embodiment, in the tensile test according to JIS K 7164:2005, is preferably 600 to 1000 MPa, more preferably 700 to 900 MPa, further preferably 750 to 850 MPa. The method for measuring the tensile strength is according to a method described in Examples.

The bending elastic modulus of the cured product according to the present embodiment, in the bending test according to JIS K 7074:1988, is preferably 50 to 80 GPa, more preferably 55 to 75 GPa, further preferably 60 to 70 GPa. The method for measuring the bending elastic modulus is according to a method described in Examples.

The bending strength of the cured product according to the present embodiment, in the bending test according to JIS K 7074:1988, is preferably 800 to 1200 MPa, more preferably 850 to 1200 MPa, preferably 900 to 1100 MPa. The method for measuring the bending strength is according to a method described in Examples.

The apparent interlaminar shear strength of the cured product according to the present embodiment, in the apparent interlaminar shear test according to JIS K 7078:1991, is preferably 50 to 90 MPa, more preferably 55 to 80 MPa, further preferably 60 to 70 MPa. The method for measuring the apparent interlaminar shear strength is according to a method described in Examples.

The cured product according to the present embodiment is preferably biodegradable. The cured product according to the present embodiment is left to still stand in the presence of a white-rot fungus under conditions of a temperature of 23°C and a humidity of 50 to 60% for 150 days, resulting in generation of a crack. The cured product can have the above constitution, and thus biodegradability of the cured product can be enhanced.

Whether or not a crack is generated is more specifically determined by the following method.

The cured product is cut out, and processed into a test piece of 50 mm × 50 mm × 2 mm, and the test piece is placed in a hyphal bottle with a white-rot fungus placed therein, and left to still stand under conditions of a temperature of 23°C and a humidity of 50 to 60% for 150 days. The test piece left to still stand is cut with a cutting machine (Labo Cutter "MC-120" manufactured by Maruto Instrument Co., Ltd.) provided with a diamond blade, and thereafter a cross section thereof is polished with a polishing machine (desktop sample polishing machine "IM-P2" manufactured by IMT Co., Ltd.), and treated with a polishing material (Alumina Polishing Material "IMT Alumina Powder Grit 1 µm" manufactured by IMT Co., Ltd.), to provide a mirrored surface. The resulting cross section is observed and imaged (magnification of 600x) with an optical microscope (Digital Microscope "VHX-6000" manufactured by Keyence Corporation), the image taken is binarized by binarization software (Image J), and the presence of any crack is evaluated with the resulting image.

### [Method for producing curable resin composition]

A method for producing a curable resin composition according to the present embodiment includes
a resin mixing step of mixing an epoxy resin, and a modified lignin chemically modified by polyethylene glycol, the modified lignin having a solvent content of 20% by mass or less, to obtain a resin mixture.

The method for producing a curable resin composition according to the present embodiment preferably further includes
a fiber impregnation step of impregnating a fiber with the resin mixture, to obtain a curable resin composition.

According to the production method according to the present embodiment, a modified lignin having a solvent content of 20% by mass or less is used to provide a curable resin composition whose cured product exhibits excellent bending strength even when a modified lignin being a biomass resource is utilized. According to the production method according to the present embodiment, a modified lignin having a solvent content of 20% by mass or less is used to provide a curable resin composition whose cured product is excellent in tensile elastic modulus and tensile strength, and also excellent in apparent interlaminar shear strength even when a modified lignin being a biomass resource is utilized.

The solvent content in the modified lignin is preferably 15% by mass or less, more preferably 10% by mass or less, further preferably 5% by mass or less, still further preferably 1% by mass or less, still further preferably 0.1% by mass or less based on the total amount of the modified lignin.

In the resin mixing step, an epoxy resin and a modified lignin are mixed to obtain a resin mixture. The mixing method is not particularly limited. The temperature in the resin mixing step is preferably 80°C or less, and may be room temperature (23°C).

In the fiber impregnation step, a fiber is impregnated with the resin mixture obtained in the above step, to obtain the curable resin composition according to the present embodiment. Conditions of the fiber impregnation step may be any conditions as long as a fiber can be impregnated with the resin mixture, and the method is not particularly limited. The temperature in the fiber impregnation step is preferably 80°C or less, more preferably 60 to 80°C.

### [Method for producing cured product of curable resin composition]

A method for producing a cured product of a curable resin composition according to the present embodiment includes
a resin mixing step of mixing an epoxy resin, and a modified lignin chemically modified by polyethylene glycol, the modified lignin having a solvent content of 20% by mass or less, to obtain a resin mixture,
a fiber impregnation step of impregnating a fiber with the resin mixture, to obtain a curable resin composition, and
a curing step of thermally curing the curable resin composition.

The resin mixing step and the fiber impregnation step are respectively common to those in the above method for producing a curable resin composition according to the present embodiment. According to the production method according to the present embodiment, a modified lignin having a solvent content of 20% by mass or less is used to provide a cured product of a curable resin composition, in which the cured product exhibits excellent bending strength even when a modified lignin being a biomass resource is utilized. According to the production method according to the present embodiment, a modified lignin having a solvent content of 20% by mass or less is used to provide a cured product of a curable resin composition, in which the cured product is excellent in tensile elastic modulus and tensile strength, and also excellent in apparent interlaminar shear strength even when a modified lignin being a biomass resource is utilized.

In the curing step, the curable resin composition is thermally cured. Curing conditions are common to the conditions described with respect to the cured product above.

### [Prepreg and cured product thereof]

The curable resin composition according to the present embodiment is used in a prepreg.

A prepreg according to the present embodiment is such that the void fraction of a cured product is preferably 3% or less, the cured product being formed by thermal curing under conditions of a pressure of 0.3 MPa and a temperature of 150°C. The prepreg according to the present embodiment is such that the void fraction is 3% or less, thereby exhibiting excellent bending strength even when a modified lignin being a biomass resource is utilized. The prepreg according to the present embodiment is such that the void fraction is 3% or less, and thus is excellent in tensile elastic modulus and tensile strength and also excellent in apparent interlaminar shear strength even when a modified lignin being a biomass resource is utilized.

The prepreg according to the present embodiment can be formed into a cured product under the same conditions as the above conditions indicated with respect to the curable resin composition. The prepreg is, for example, processed into a desired shape and then cured, and thus used as a material high in rigidity.

### [Laminated structure]

Figure 1 is a cross-sectional view illustrating a schematic configuration of a laminated structure according to the present embodiment. As illustrated in Figure 1, the laminated structure according to the present embodiment includes a first resin layer (1) including the cured product according to the present embodiment, a foam layer (2) including a foam, and a second resin layer (3) including the cured product according to the present embodiment, in the listed order.

The laminated structure according to the present embodiment has the above configuration, and thus exhibits excellent mechanical properties even when a modified lignin as a biomass resource is utilized.

The first resin layer and the second resin layer each include the cured product of the curable resin composition. Examples and suitable examples of the curable resin composition are as described above. The first resin layer and the second resin layer are suitably respectively a first fiber-reinforced resin layer including a cured product of the curable resin composition including the fiber and a second fiber-reinforced resin layer including a cured product of the curable resin composition including the fiber, from the viewpoint that more excellent mechanical properties are obtained.

The foam layer includes a foam. The foam is not particularly limited, a known material such as an epoxy foam resin, a phenol foam resin, or a urethane foam resin may be used, and a foam containing the modified lignin chemically modified by polyethylene glycol is preferably used.

The curable resin composition, the cured product, the prepreg, the cured product of the prepreg, and the laminated structure according to the present embodiment can be each widely used in aerospace applications, general industry applications such as automobile, marine vessels and railway vehicles, and sporting applications.

### Examples

Hereinafter, the present embodiment is further specifically described with reference to Examples, but the present embodiment is not limited to the following Example.

### [Confirmation of incompatible state]

### (Curable resin composition)

The curable resin composition produced was partially collected, and the resin state was observed with an optical microscope. The resin, the curing agent, the curing accelerator, and the modified lignin were observed in an observation visual field. The resin portion was observed as a transparent portion, the curing agent/curing accelerator was observed as a translucent crystal portion, and the modified lignin was observed as a brown crystal portion. A case where such a brown crystal portion was observed was determined to be an incompatible state.

### (Cured product)

A test piece for measurement was cut out from the cured product, and compatibility of the resin was observed with an optical microscope. A resin region and a fiber region were observed in an observation visual field, and a case where any resin interface was observable in the resin region was determined to be an incompatible state and a case where no resin interface was observable in the resin region was determined to be a compatible state.

### [Void fraction]

A strip-shaped test piece having a thickness of 1 mm, a length of 100 mm, and a width of 25 mm was produced by processing the curable resin composition into a sheet having a thickness of 0.2 mm and stacking five of such sheets obtained.

The test piece was thermally cured under conditions of a pressure of 0.3 MPa and a temperature of 150°C for 2 hours.

A test piece for measurement was cut out from the cured product, and an observation image of a cross section thereof was binarized and observed with an optical microscope. The area of a void observed in an observation visual field was calculated, and the proportion thereof based on the total area of the observation visual field was defined as the void fraction (%).

### [Tensile test]

The tensile test was performed by the method according to JIS K 7164:2005. A test piece of the cured product was produced to perform the tensile test, and the amount of strain, the elastic modulus and the strength were calculated. The tensile test was performed under the following conditions.

### <Test conditions>

Crosshead speed: 1 to 3 mm/min
Strain measurement method: calculated by amount of crosshead moved or strain gauge
Test piece size:
   Shape: rectangular strip
   Total length: 250 mm
   Width: 25 mm
   Thickness: 2 mm
   Length between gripping tools: 150 mm

### [Compression test]

The compression test was performed by the method according to JIS K 7018:2019. A test piece of the cured product was produced to perform the compression test, and the elastic modulus and the strength were calculated. The compression test was performed under the following conditions.

### <Test conditions>

Crosshead speed: 1 mm/min
Strain measurement method: calculated by amount of crosshead moved or strain gauge
Test piece size:
   Shape: rectangular strip
   Total length: 78 mm
   Width: 12.5 mm
   Thickness: 2 mm
   Length between tabs: 8 mm

### [Bending test]

The bending test was performed by the method according to JIS K 7074:1988. A test piece of the cured product was produced to perform the bending test, and the amount of deflection, the elastic modulus and the strength were calculated. The bending test was performed under the following conditions.

### <Test conditions>

Crosshead speed: 1 to 5 mm/min
Deflection measurement method: calculated by amount of crosshead moved
Test piece size:
   Shape: rectangular strip
   Length: 100 mm
   Width: 15 mm
   Thickness: 2 mm
   Distance between supporting points: 80 mm

### [Apparent interlaminar shear test]

The apparent interlaminar shear test was performed by the method according to JIS K 7078:1991. A test piece of the cured product was produced to perform the apparent interlaminar shear test, and the strength was calculated. The apparent interlaminar shear test was performed under the following conditions.

### <Test conditions>

Crosshead speed: 1 to 2 mm/min
Test piece size:
   Shape: rectangular strip
   Length: 14 mm
   Width: 10 mm
   Thickness: 2 mm
   Distance between supporting points: 10 mm

### [Evaluation of biodegradability]

The curable resin composition obtained in each of Examples and Comparative Examples was cut out, and processed into a test piece of 50 mm × 50 mm × 2 mm, and the test piece was placed in a hyphal bottle with a white-rot fungus placed therein, and left to still stand under conditions of a temperature of 23°C and a humidity of 50 to 60% for 150 days. The test piece left to still stand was cut with a cutting machine (Labo Cutter "MC-120" manufactured by Maruto Instrument Co., Ltd.) provided with a diamond blade, and thereafter a cross section thereof was polished with a polishing machine (desktop sample polishing machine "IM-P2" manufactured by IMT Co., Ltd.), and treated with a polishing material (Alumina Polishing Material "IMT Alumina Powder Grit 1 µm" manufactured by IMT Co., Ltd.), to provide a mirrored surface. The resulting cross section was observed and imaged (magnification of 600x) with an optical microscope (Digital Microscope "VHX-6000" manufactured by Keyence Corporation). The image taken was binarized by binarization software (Image J), and the number of cracks was counted in the resulting image. The average crack length was determined by measuring the length of cracks counted, and calculating the numerical average value.

### [Measurement of maximum heat generation in curing]

The result obtained by packing 2 to 5 mg of the curable resin composition in an aluminum sample pan having a volume of 50 µL, and performing measurement under the following conditions was defined as the initial amount of heat generation in curing. Subsequently, the result obtained by placing the curable resin composition in air under a condition of a temperature of 100°C, sampling the curable resin composition every 10 minutes and packing 2 to 5 mg of the sampled product in an aluminum sample pan having a volume of 50 µL, and performing measurement under the following conditions was defined as the amount of heat generation in curing.
Apparatus: differential scanning calorimeter (DSC, Model number "DSC-60A" manufactured by Shimadzu Corporation)
Initial temperature: 40°C
Rate of temperature rise: 10°C/min
Maximum temperature raised: 250°C

The integral value in a DSC curve around 60°C to 250°C was determined from the results obtained by the above measurement, and was defined as the amount of heat generation in curing. In a case where a plurality of exothermic peaks was observed in a mixture or the like, the total was adopted as the amount of heat generation in curing of the relevant composition. The value showing the maximum value, among the results measured at 10 minutes, 20 minutes, 30 minutes, 40 minutes, 50 minutes, and 60 minutes, was defined as the maximum amount of heat generation in curing. The proportion (%) of the maximum amount of heat generation in curing was calculated from the following expression. Proportion (%) of maximum amount of heat generation in curing = [Maximum amount of heat generation in curing]/[Initial amount of heat generation in curing] × 100

### [Temperature-programmed viscosity measurement]

Temperature-programmed viscosity measurement of the curable resin composition was performed under the following conditions.
Apparatus: rheometer (product name "DISCOVERY HR-2" TA Instruments Japan),
Plate used: 25ϕ parallel plate,
Plate gap: 0.8 mm,
Measurement frequency: 1.0 Hz,
Initial temperature: 25°C,
Rate of temperature rise: 5°C/min
Maximum temperature raised: 180°C
Stress: 300 Pa

The temperature-programmed viscosity measurement was performed with a sample installed on a plate under the following measurement conditions, and viscosity properties by the change in temperature were evaluated.

### [Example 1]

### (Production of resin mixture)

A mixture containing a modified lignin could be obtained by mixing 30 parts by mass of a modified lignin powder chemically modified by polyethylene glycol with a weight of 100 parts by mass of a mixture of a bisphenol A type epoxy resin and a novolac type epoxy resin, 4 parts by mass of dicyandiamide, and 2 parts by mass of 3-(3,4-dichlorophenyl)-1,1-dimethylurea (DCMU).

### (Production of sheet of mixture)

A sheet having a thickness of 1 mm, a length of 500 mm, and a width of 500 mm was produced by processing the mixture into a sheet having a thickness of 0.2 mm and stacking five of such sheets obtained.

### (Prepreg)

The above sheet was impregnated with a carbon fiber woven, to produce a curable resin composition (prepreg).

Subsequently, the resulting curable composition was subjected to measurement of the maximum heat generation in curing, and temperature-programmed viscosity measurement. The results were shown in Table 4 and Table 5.

### (Cured product)

The curable resin composition (prepreg) was heated at 150°C for 2 hours, to obtain a cured product of the curable resin composition after curing. The cured product obtained was subjected to the tensile test, the compression test, the bending test, and the apparent interlaminar shear strength by the above methods, and the results were shown in Table 2.

Subsequently, biodegradation evaluation was performed with the cured product obtained. The results were shown in Table 3.

### [Examples 2 to 5]

Each curable resin composition (prepreg) and its cured product were produced in the same manner as in Example 1 except that the amount of addition of the modified lignin powder chemically modified by polyethylene glycol was changed as shown in Table 1. The cured product obtained in Example 3 was subjected to the tensile test, the bending test, and the apparent interlaminar shear strength, and the results were shown in Table 2. Subsequently, biodegradation evaluation was performed with the cured product obtained in Example 3. The results were shown in Table 3.

### [Example 6]

A curable resin composition (prepreg) was produced in the same manner as in Example 1 except that the dicyandiamide was changed to 22.5 parts by mass of diaminodiphenylsulfone and the 3-(3,4-dichlorophenyl)-1,1-dimethylurea (DCMU) was changed to 1 part by mass of a methylamine-boron trifluoride complex.

Subsequently, the resulting curable composition was subjected to measurement of the maximum heat generation in curing, and temperature-programmed viscosity measurement. The results were shown in Table 4 and Table 5.

### [Comparative Example 1]

A curable resin composition (prepreg) and its cured product were produced in the same manner as in Example 1 except that no modified lignin was used. The cured product obtained was subjected to the tensile test, the bending test, and the apparent interlaminar shear strength, and the results were shown in Table 2. Subsequently, biodegradation evaluation was performed with the cured product obtained. The results were shown in Table 3.

### [Table 1]

**Table 1**

| | | Example 1 | Example 2 | Example 3 | Example 4 | Example 5 | Comparative Example 1 |
|---|---|---|---|---|---|---|---|
| Curable resin composition (parts by mass) | Epoxy resin (parts by mass) | 100 | 100 | 100 | 100 | 100 | 100 |
| | Modified lignin (parts by mass) | 30 | 40 | 50 | 60 | 70 | 0 |
| | Curing agent (parts by mass) | 4 | 4 | 4 | 4 | 4 | 4 |
| | Curing accelerator (parts by mass) | 2 | 2 | 2 | 2 | 2 | 2 |
| | Carbon fiber | Impregnated | Impregnated | Impregnated | Impregnated | Impregnated | Impregnated |
| | Solvent content (% by mass) | 0 | 0 | 0 | 0 | 0 | 0 |
| | Incompatible state | ○ | ○ | ○ | ○ | ○ | - |
| Cured product | Void fraction (%) | 0 | 0.1 | 0.3 | 0.5 | 0.6 | 0 |
| | Incompatible state | ○ | ○ | ○ | ○ | ○ | - |
| DSC measurement | Onset (°C) | 153.65 | 155.08 | 153.16 | 153.86 | 158.33 | 141.95 |
| | Peak top (°C) | 163.81 | 169.14 | 170.50 | 168.99 | 172.85 | 154.35 |
| | Amount of heat (J/g) | 99.48 | 83.82 | 97.45 | 95.88 | 92.21 | 302.79 |

### [Table 2]

**Table 2**

| Example/Comparative Example | Tensile elastic modulus (GPa) | Tensile strength (MPa) | Compressive elastic modulus (GPa) | Compressive strength (MPa) | Bending elastic modulus (GPa) | Bending strength (MPa) | Apparent interlaminar shear strength (MPa) |
|---|---|---|---|---|---|---|---|
| Example 1 | 72 | 760 | 69 | 795 | 62 | 1011 | 70 |
| Example 3 | 71 | 755 | 69 | 776 | 62 | 973 | 62 |
| Comparative Example 1 | 71 | 815 | 67 | 706 | 60 | 996 | 69 |

### [Table 3]

**Table 3**

| | State of cross section | |
|---|---|---|
| Example/Comparative Example | Number of cracks (cracks/mm²) | Average crack length (mm) |
| Example 1 | 102 | 0.029 |
| Example 3 | 174 | 0.050 |
| Comparative Example 1 | 0 | 0 |

### [Table 4]

**Table 4**

| | Maximum amount of heat generation for 10 to 60 min (J/g) | Initial amount of heat generation (J/g) | Proportion (%) (Maximum amount of heat generation/Initial amount of heat generation × 100) |
|---|---|---|---|
| Example 1 | 123.84 | 99.48 | 124 |
| Example 6 | 118.22 | 95.35 | 124 |
| Comparative Example 1 | 291.00 | 302.79 | 96 |

### [Table 5]

**Table 5**

| | Local maximum value | Local maximum temperature (°C) |
|---|---|---|
| Example 1 | present | 98.72 |
| Example 6 | present | 100.53 |
| Comparative Example 1 | absent | - |

### Reference Signs List

1: first resin layer
2: foam layer
3: second resin layer

## Claims

1. A curable resin composition comprising an epoxy resin, and a modified lignin chemically modified by polyethylene glycol, wherein the epoxy resin and the modified lignin are in an incompatible state.

2. The curable resin composition according to claim 1, further comprising a fiber.

3. A curable resin composition comprising an epoxy resin, a modified lignin chemically modified by polyethylene glycol, and a fiber, wherein
a void fraction of a cured product is 3% or less, in which the cured product is obtained by processing the curable resin composition into a sheet having a thickness of 0.2 mm, stacking five such sheets to make a test piece having a thickness of 1 mm, and thermally curing the test piece under conditions of a pressure of 0.3 MPa and a temperature of 150°C.

4. A curable resin composition comprising an epoxy resin, a modified lignin, and a curing agent, wherein
an amount of heat generation in curing increases along with time course.

5. The curable resin composition according to claim 4, wherein a maximum amount of heat generation in curing, at a temperature of 100°C for 10 to 60 minutes in differential scanning calorimetry, is 100% or more relative to an initial amount of heat generation in curing.

6. The curable resin composition according to claim 5, wherein a proportion of the amount of heat generation in curing increases over time relative to the initial amount of heat generation in curing, in a relationship between an elapsed time under a condition of a temperature of 100°C and the amount of heat generation in curing.

7. The curable resin composition according to claim 4, wherein a local maximum value of viscosity is observed when a temperature rises under a condition of 5°C/min from room temperature of 25°C by temperature-programmed viscosity measurement.

8. The curable resin composition according to claim 7, wherein a temperature giving the local maximum value is 70 to 130°C.

9. The curable resin composition according to claim 4, wherein the modified lignin is a modified lignin chemically modified by polyethylene glycol.

10. The curable resin composition according to claim 4, further comprising a fiber.

11. The curable resin composition according to any one of claims 1 to 10, further comprising an amine curing agent.

12. The curable resin composition according to claim 11, wherein the amine curing agent contains at least one selected from the group consisting of an aminophenylsulfone curing agent and a dicyandiamide curing agent.

13. The curable resin composition according to claim 11, further comprising at least one selected from the group consisting of a boron halide-amine complex curing accelerator and an aromatic urea curing accelerator.

14. The curable resin composition according to claim 2, 3 or 10, wherein the fiber is at least one selected from the group consisting of a carbon fiber, a glass fiber, an organic fiber, and a natural fiber.

15. The curable resin composition according to claim 14, wherein the fiber is a carbon fiber.

16. The curable resin composition according to any one of claims 1 to 10, wherein a content of the modified lignin is 20 to 60 parts by mass based on 100 parts by mass of the epoxy resin.

17. A cured product of the curable resin composition according to any one of claims 1 to 10.

18. A prepreg comprising the curable resin composition according to any one of claims 1 to 10.

19. The prepreg according to claim 18, wherein a void fraction of a cured product obtained by thermal curing under conditions of a pressure of 0.3 MPa and a temperature of 150°C is 3% or less.

20. A cured product of the prepreg according to claim 18.

21. The cured product according to claim 20, wherein a content of the fiber is 30 to 70% by volume based on a volume of the cured product.

22. The cured product according to claim 21, wherein a compressive strength in an in-plane compression test according to JIS K 7018:2019 is 600 to 900 MPa.

23. The cured product according to claim 21, wherein a compressive elastic modulus in an in-plane compression test according to JIS K 7018:2019 is 60 to 80 GPa.

24. The cured product according to claim 21, wherein a tensile elastic modulus in a tensile test according to JIS K 7164:2005 is 60 to 80 GPa.

25. The cured product according to claim 21, wherein a tensile strength in a tensile test according to JIS K 7164:2005 is 600 to 1000 MPa.

26. The cured product according to claim 21, wherein a bending elastic modulus in a bending test according to JIS K 7074:1988 is 50 to 80 GPa.

27. The cured product according to claim 21, wherein a bending strength in a bending test according to JIS K 7074:1988 is 800 to 1200 MPa.

28. The cured product according to claim 21, wherein an apparent interlaminar shear strength in an apparent interlaminar shear test according to JIS K 7078:1991 is 50 to 90 MPa.

29. The cured product according to claim 17, wherein the cured product is biodegradable.

30. The cured product according to claim 29, wherein a crack is generated by leaving the cured product in the presence of a white-rot fungus under conditions of a temperature of 23°C and a humidity of 50 to 60% for 150 days.

31. A laminated structure comprising
a first resin layer comprising the cured product according to claim 21,
a foam layer comprising a foam, and
a second resin layer comprising the cured product according to claim 21,
in this order.

32. The laminated structure according to claim 31, wherein the foam comprises a modified lignin chemically modified by polyethylene glycol.

33. A method for producing a curable resin composition, comprising a resin mixing step of mixing an epoxy resin, and a modified lignin chemically modified by polyethylene glycol, and having a solvent content of 20% by mass or less to obtain a resin mixture.

34. The method for producing a curable resin composition according to claim 33, further comprising a fiber impregnation step of impregnating a fiber with the resin mixture to obtain a curable resin composition.

35. A method for producing a cured product of a curable resin composition, comprising a curing step of thermally curing the curable resin composition obtained by the method for producing a curable resin composition according to claim 33 or 34.
